(19) Europäisches Patentamt

European Patent Office

Office européen des brevets

(11) EP 0 903 871 B1

(12) EUROPEAN PATENT SPECIFICATION

(45) Date of publication and mention
of the grant of the patent:
**30.06.2004 Bulletin 2004/27**

(51) Int Cl.⁷: **H04B 1/707**, H04J 13/04

(21) Application number: **98306565.7**

(22) Date of filing: **18.08.1998**

(54) **Spread spectrum signal generating device and method**

Spreizspektrumsignalerzeugungseinrichtung und -verfahren

Dispositif et procédé de génération de signal à spectre étalé

(84) Designated Contracting States:
**DE FR GB**

(30) Priority: **18.08.1997 KR 3920097**
**18.08.1997 KR 3919997**

(43) Date of publication of application:
**24.03.1999 Bulletin 1999/12**

(73) Proprietor: **Samsung Electronics Co., Ltd.**
**Suwon-city, Kyungki-do (KR)**

(72) Inventors:
• **Yoon, Soon-Young**
**Samsung Electronics Co., Ltd**
**Suwon-city Kyungki-do (KR)**
• **Ahn, Jae-Min**
**Kangnam-gu, Seoul (KR)**
• **Kang, Hee-Won**
**Chungnang-gu, Seoul (KR)**
• **Kim, Young-ky Samsung Electronics Co., Ltd**
**Suwon-city Kyungki-do (KR)**
• **No, Jong-Seon**
**Songnam-Shi, Kyonggi-Do (KR)**
• **Song, Hong-Yeop Samsung Electronics Co., Ltd**
**Suwon-city Kyungki-do (KR)**
• **Chung, Ha-Bong Samsung Electronics Co., Ltd**
**Suwon-city Kyungki-do (KR)**
• **Kim, Je-Woo**
**Songnam-Shi, Kyonggi-Do (KR)**

(74) Representative: **Lunt, Mark George Francis**
**Harrison Goddard Foote,**
**Fountain Precinct**
**Balm Green**
**Sheffield S1 2JA (GB)**

(56) References cited:
**WO-A-95/23464**       **WO-A-99/01994**

• **ADACHI F ET AL: "Wideband multi-rate DS-CDMA for next generation mobile communications systems" PROCEEDINGS. 1997 WIRELESS COMMUNICATIONS CONFERENCE (CAT. NO.97TH8315), PROCEEDINGS OF 1997 WIRELESS COMMUNICATIONS CONFERENCE, BOULDER, CO, USA, 11-13 AUG. 1997, pages 57-62, XP002093855 ISBN 0-7803-4194-5, 1997, New York, NY, USA, IEEE, USA**
• **FUYUN LING: "Pilot assisted coherent DS-CDMA reverse-link communications with optimal robust channel estimation" 1997 IEEE INTERNATIONAL CONFERENCE ON ACOUSTICS, SPEECH, AND SIGNAL PROCESSING (CAT. NO.97CB36052), 1997 IEEE INTERNATIONAL CONFERENCE ON ACOUSTICS, SPEECH, AND SIGNAL PROCESSING, MUNICH, GERMANY, 21-24 APRIL 1997, pages 263-266 vol.1, XP002093856 ISBN 0-8186-7919-0, 1997, Los Alamitos, CA, USA, IEEE Comput. Soc. Press, USA**

## Description

The present invention relates to a spread spectrum signal generating device and method and more particularly to a transmitter and a transmission method in a spread spectrum mobile communications system, and in particular, to a spread spectrum signal generating device and method for managing transmit output levels.

Along with the deployment of a CDMA (Code Division Multiple Access) mobile communications system, various DSS (Direct Spread Spectrum) transmission and reception schemes have been explored. Coherent demodulation is known to be very effective in increasing the subscriber accommodating capacity of a DSS-CDMA mobile communications system due to a small signal-to-noise ratio required to obtain a given frame error rate, as compared to incoherent demodulation.

To realise coherent demodulation in a mobile communications environment, the complex gain of a received multipath channel signal of each path should be determined. Complex gains are calculated by a decision directed method or a pilot assisted method. The latter is generally used due to its excellent performance and easy realisation. For details of the pilot assisted method, see "Performance of Adaptive Match Filter Receivers Over Fading Multipath Channels" by Pahlavan and Matthews, IEEE Transactions on Communications, Vol. 38, No. 12, December 1990, pp. 2106-221.

The pilot assisted method is implemented by parallel probing or serial probing. In parallel probing, a transmitter spreads a spread user data signal, including information and data known to a receiver, with different PN (Pseudo random Noise) sequences. However, data known to the receiver is periodically inserted into the spread user data signal, including information, and then they are spread with the same PN symbol, in serial probing.

WO 99/01994 filed under PCT/US98/13678 discloses a subscriber unit and method in which pilot data and control data are combined into one channel of four sub-channels to allow substantially continuous transmission to be realised which, in turn, influences the peak-to-average power ratio of that single channel.

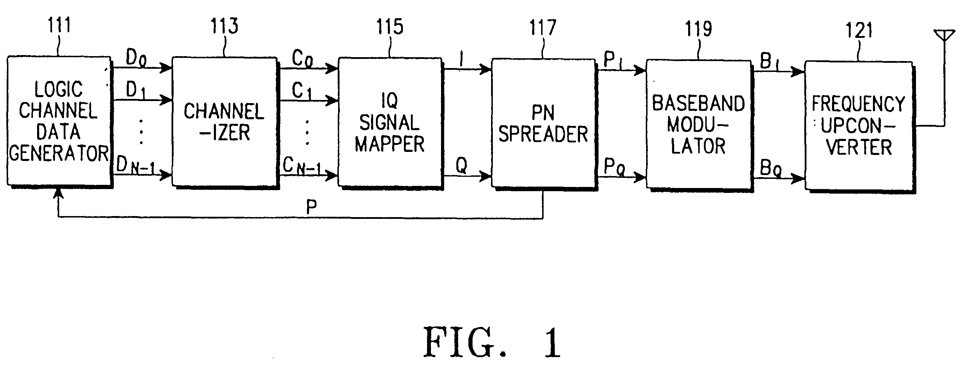

For CDMA mobile radio communications, a user needs to transmit different data such as voice data, control data, and packet data for a high-speed data service or a multimedia service. Two cases should be considered for such data transmission: one is that a small peak-to-average power (PAR) ratio at an output terminal of a terminal leads to a decrease in power dissipation and manufacturing cost of the terminal; and the other is that intermittent output of the terminal may cause a device that a user carries to malfunction, such as a hearing aid or a cardiometer. The serial probing is inferior to the parallel probing in terms of intermittent output, but advantageous over the parallel probing in terms of PAR. Figure 1 is a block diagram of a transmitter for generating a transmission signal including a pilot signal on a reverse link in a point-to-point spread spectrum CDMA cellular communications system.

Referring to figure 1, a logical channel data generator 111 has a plurality of data generators for generating channel data and a plurality of scramblers for scrambling the channel data. A channeliser 113 processes the data received from the logical channel data generator 111 in such a manner that interference between channels is small and that the PAR is small. An IQ signal mapper 115 maps the channelised signals received from the channeliser 113 into in-phase and quadrature-phase signals. A PN spreader 117 spreads the output of the IQ signal mapper 115 with PN codes. A baseband modulator 119 translates the spread signal received from the PN spreader 117 to a baseband signal and modulates the baseband signal. A frequency upconverter 121 upconverts the frequency of the modulated signal received from the baseband modulator 119 to a transmission frequency and outputs a radio transmission signal.

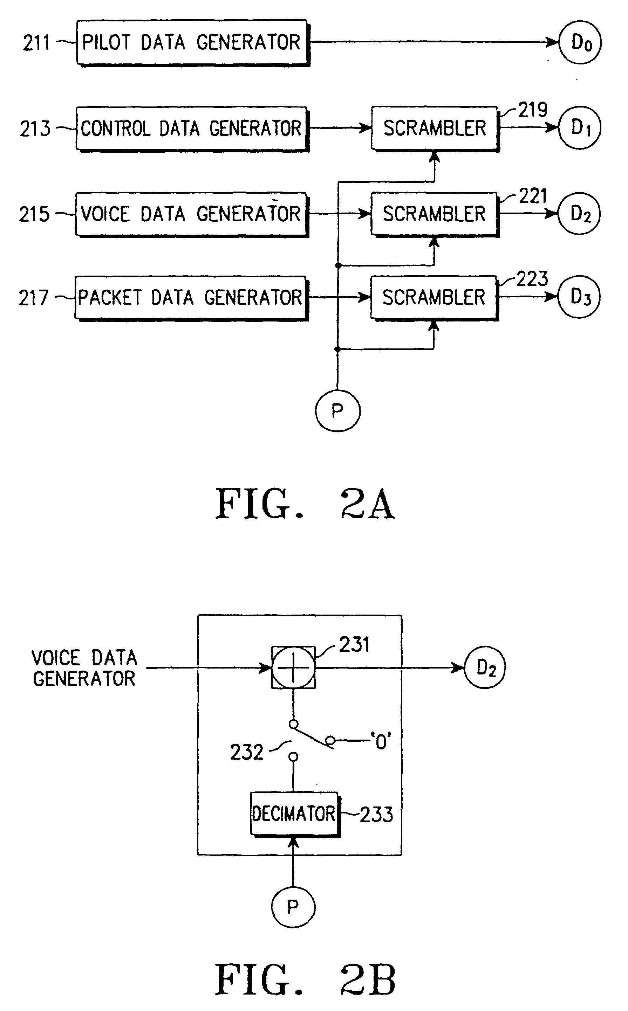

Figure 2A is a block diagram of the logical channel data generator 111 shown in figure 1 and figure 2B is a block diagram of the scramblers shown in figure 2A.

Referring to figure 2A, the logical channel data generator 111 includes a pilot data generator 211, a control data generator 213, a voice data generator 215, and a packet data generator 217. The pilot data generator 211 outputs unmodulated consecutive 0 bits. Control data generated from the control data generator 213 is composed of a power control command for power control on a forward link or other control information. The voice data generator 215 outputs data from a variable bit rate (VBR) vocoder. The voice data output from the vocoder can be, for example, a convolutionally encoded and interleaved bit sequence. The encoded voice data is output at a VBR of ½, ¼, or 1/8, increasing one bit time by two, four, or eight times. The packet data generator 217 has an output bit rate which is an integer multiple of the highest bit rate 1 to 8 of the voice data generator 215.

Scramblers 219, 221 and 223 scramble the data received from the control data generator 213, the voice data generator 215, and the packet data generator 217, respectively.

Referring to figure 2B, a switch 232 of the scramblers 219, 221 or 223 selectively outputs the output of a decimator 233 or data "0", and an exclusive OR gate 231 exclusive-Ors the data received from the data generators 213, 215, or 217 with the output of the decimator 233 or the data "0" selected by the switch 232. The decimator 233 decimates a second PN code sequence (i.e., long PN code sequence) P at the same bit rate as that of the control, voice and packet data, which were all encoded and interleaved.

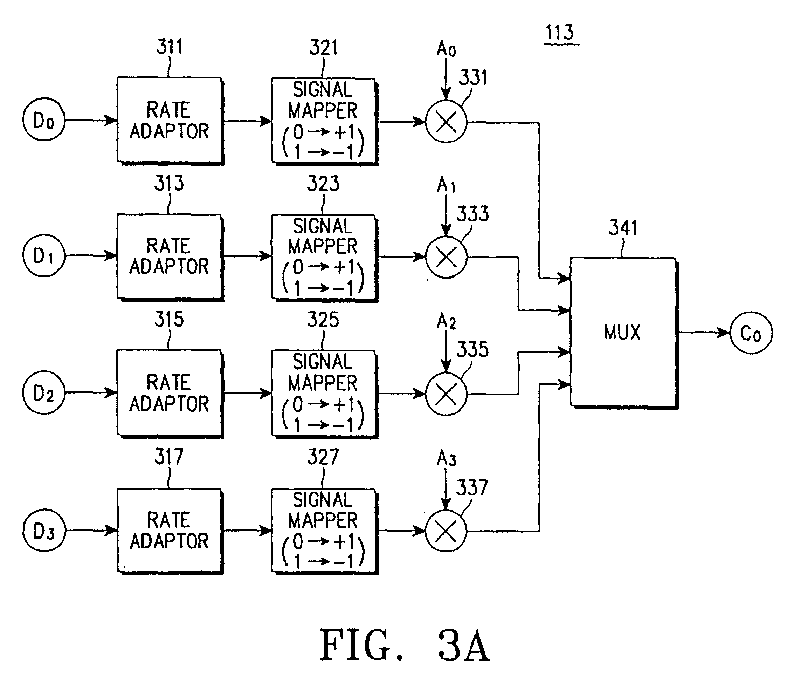

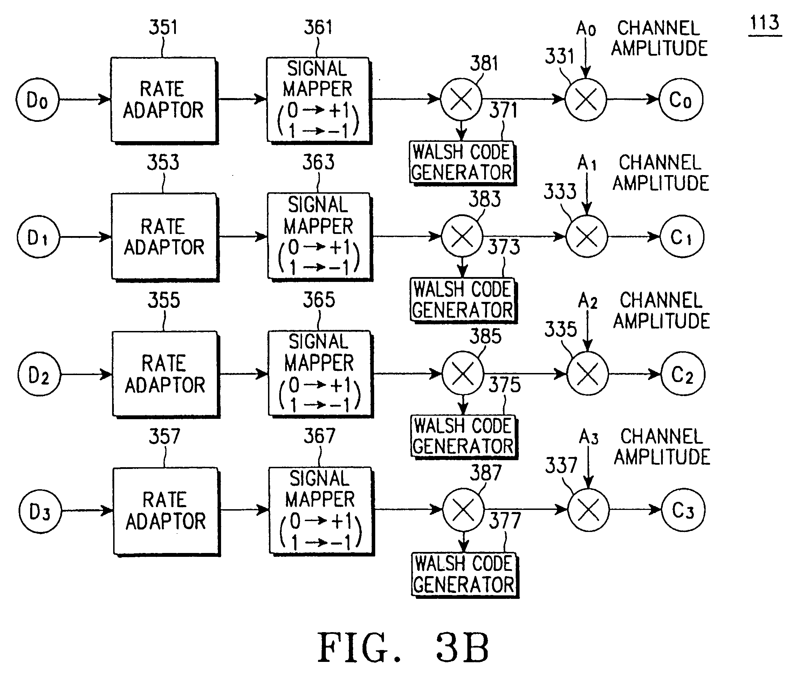

Figures 3A and 3B are block diagrams of the channeliser 113 shown in figure 1, differently configured according to the serial and parallel probe methods.

Referring to figure 3A, rate adaptors 311 to 317, connected to the respective data generators 211 to 217, adjust the data rates of the data generators 211 to 217. Signal mappers 321 to 327, connected to the respective rate adaptors 311 to 317, convert bits 0s and 1s of rate-adapted data to +1s and -1s, respectively. Multipliers 331 to 337 multiply converted signals received from the signal mappers 321 to 327 by corresponding channel amplitude control signals A0 to A3. A multiplexer 341 multiplexes the outputs of the multipliers 331 to 337.

In the channeliser 113 using the serial probe scheme, each data is time multiplexed to an output $C_o$, to occupy a different time slot and the time that the data occupies is adjusted by varying the number of repetitions of the outputs of the data generators 211 to 217 in the rate-adaptors 311 to 317. The rate-adapted data is converted from logical channel data 0s and 1s to +1s and -1s suitable for transmission by the signal converters 321 to 327 and multiplied by the channel amplitude control signals A0 to A3 by the multipliers 331 to 337, thereby determining power levels.

Referring to figure 3B, rate adaptors 351 to 357 are connected to the data generators 211 to 217 of the logical channel data generator 111 and adjust data transmission rates of the corresponding data generators 211 to 217. Signal mappers 361 to 367 are connected to the corresponding rate adaptors 351 to 357, for converting bits 0s and Is of rate-adapted data to +1s and -1s, respectively. Walsh code generators 371 to 377 generate Walsh codes WO to W3. Multipliers 381 to 387 multiply signals received from the signal mappers 321 to 327 by the Walsh codes W0 to W3 received from the Walsh code generators 371 to 377 to reduce or remove interference between channels and phase errors. Thus, the Walsh code generators 371 to 377 and the multipliers 381 to 387 serve as an interference remover. Multipliers 391 to 397 multiply the outputs of the multipliers 381 to 387 by the corresponding channel amplitude control signals A0 to A3 acting as a channel amplitude controller.

In the channeliser 113 using the parallel probe method, the occupation time of each data is adjusted by varying the number of repetitions of the outputs of the data generators 211 to 217 by the rate adaptors 351 to 357. The rate-adapted data is converted from logical channel data 0s and 1s to +1s and -1s suitable for transmission by the signal mappers 321 to 217, and multiplied by the mutually orthogonal Walsh codes by the multipliers 381 to 387 thereby reducing interference between channels and phase error-induced performance deterioration. The outputs of the multipliers 381 to 387 are multiplied by the corresponding channel amplitude control signals A0 to A3 by multipliers 391 to 397 so that power levels are controlled.

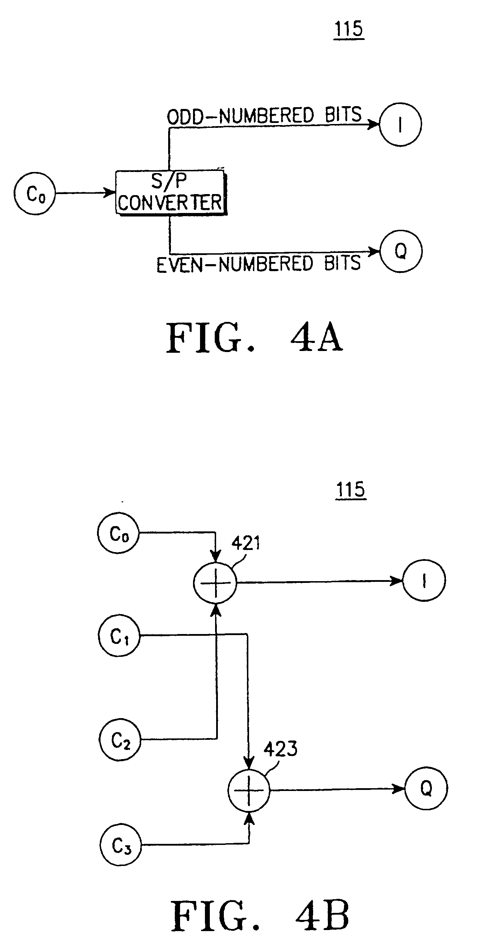

Figure 4A is a block diagram of the IQ signal mapper 115 shown in figure 1, which is connected to the channeliser 113 for the serial probe scheme, and figure 4B is a block diagram of the IQ signal mapper 115 shown in figure 1, which is connected to the channeliser 113 for the parallel probe scheme. The IQ signal mapper 115 maps a channelised signal into in-phase and quadrature-phase signals.

As the final output $C_o$ of the channeliser 113 using the serial probe scheme is multiplexed data, the IQ signal mapper 115 of figure 4 is provided with a serial-to-parallel converter 411 for separating the multiplexed signal into odd-numbered bits and even-numbered bits and generating an in-phase signal (I signal) and a quadrature-phase signal (Q signal).

Since the final output of the channeliser 113 using the parallel probe scheme is non-multiplexed parallel data, the IQ signal mapper 115 of figure 4B has an adder 421 for adding the pilot channel signal $C_o$ and the voice channel signal $C_2$ and thus generating an I signal, and an adder 423 for adding the control channel signal $C_1$ and the packet channel signal $C_1$ and thus generating a Q signal.

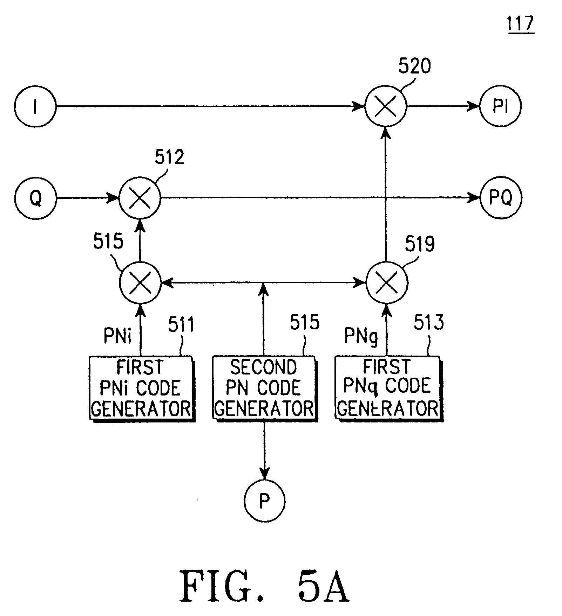

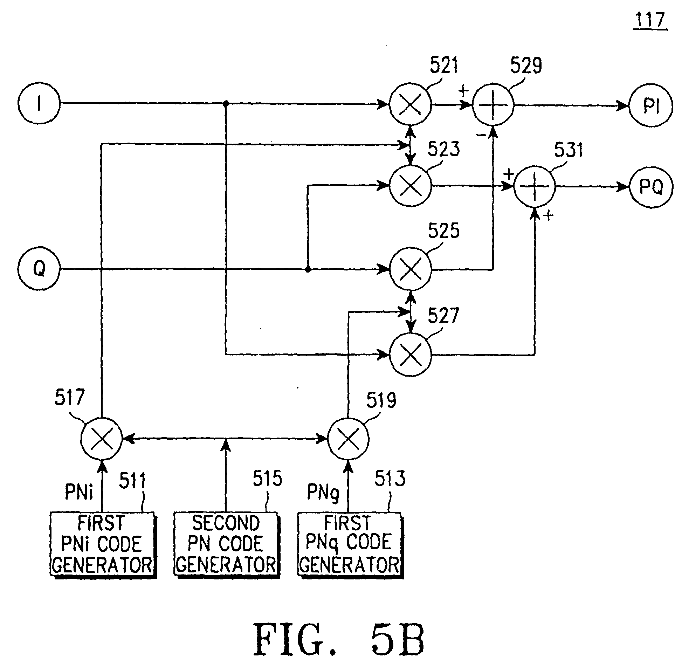

Figure 5A is a block diagram of the PN spreader 117 shown in figure 1 using an IQ split method, and figure 5B is a block diagram of a PN spreader 117 shown in figure 1 using a complex spreading method. Here, a first PN code refers to a short PN code, and a second PN code refers to a long PN code, see for example, IS-IT 5 standard reverse link spreading.

Referring to figure 5A, a first PNi code generator 511 generates an in-phase PN code, PNi, and a first PNq code generator 513 generates a quadrature-phase PN code, PNq. A second PN code generator 515 generates a long PN code commonly applied to the in-phase PN code, PNi and the quadrature-phase PN code, PNq. A multiplier 571 multiplies PNi by the second PN code thereby generating an in-phase PN code. A multiplier 519 multiplies PNq by the second PN code, thereby generating a quadrature-phase PN code. A multiplier 520 multiplies the I signal received from the IQ signal mapper 115 by the quadrature-phase PN code and generates a spread signal PI. A multiplier 512 multiplies the Q signal received from the IQ signal mapper 115 by the in-phase PN code and generates a spread signal PQ.

Now, there will be given a description of the PN spreader 117 for complex spreading shown in figure 5B. Referring to figure 5B, the first PNi code generator 511 generates the in-phase PN code, PNi, and the first PNq code generator 513 generates a quadrature-phase PN code PNq. The second PN code generator 515 generates a long PN code commonly applied to both of the PN codes PNi and PNq. The multiplier 517 multiplies PNi by the second PN code thereby generating an in-phase PN code. The multiplier 519 multiplies PNq by the second PN code thereby generating a quadrature-phase PN code. A multiplier 521 multiplies the I signal received from the IQ signal mapper 115 by the in-phase PN code. A multiplier 523 multiplies the Q signal received from the IQ signal mapper 115 by the in-phase PN code. A multiplier 525 multiplies the Q signal received from the IQ signal mapper 115 by the quadrature-phase PN code. A multiplier 527 multiplies the I signal received from the IQ signal mapper 115 by the quadrature-phase PN code. A subtracter 529 subtracts the output of the multiplier 525 from the output of the multiplier 521 and generates a complex-spread in- phase signal PI. An adder 531 adds the outputs of the multipliers 523 and 527 and generates a complex-spread quadrature-phase signal PQ.

The PN spreader 117 of figure 5B is advantageous over that figure 5A in terms of peak-to-average power ratio.

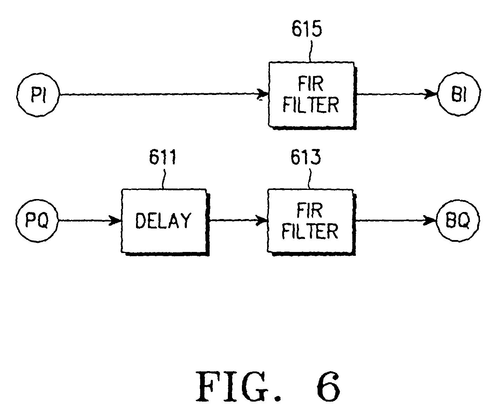

The baseband modulator 119 configured as shown in figure 6 modulates the spread signals PI and PQ received from the PN spreader 117 shown in figure 5A or 5B. Referring to figure 6, the spread signal PI is filtered by an FIR (Finite Impulse Response) filter 615 whereas the spread signal PQ is delayed by a predetermined time in a delay 611 and filtered by an FIR filter 613. The baseband modulator 119 may operate based on OQAM (offset Quadrature Amplitude Modulation).

A transmitter using the parallel probe method includes the channeliser 113 of figure 3B, the IQ signal mapper 115 of figure 4B, the PN spreader 117 of figure 5B and the baseband modulator 119 of figure 6. On the other hand, a transmitter using the serial probe method has the channeliser 113 of figure 3A, the IQ signal mapper 115 of figure 4A, the PN spreader 117 of figure 5A, and the baseband modulator 119 of figure 6.

The transmitter using the parallel probe method increases PAR, and that of the serial probe method suffers a significant power variation due to a varied bit rate of a voice signal and the intermittent presence of a packet signal, thereby increasing interference.

Therefore, concurrent use of multiple.channels gives rise to problems associated with an amplifier in the conventional transmitters. That is, because the pilot channel, the control channel, the voice channel, and the packet channel are simultaneously used, a peak-to-average power ratio is increased, which implies that the amplifier should exhibit an excellent linearity. In particular, a terminal using only the voice channel (i.e. low speed traffic channel) without the packet channel (i. e. high speed traffic channel) may have a significantly increased peak-to-average power ratio depending on gain adjustment for channels.

Accordingly, a first aspect of the present invention provides a spread spectrum signal generating device for a transmitter of a mobile communication system using a plurality of channels comprising at least one of either constant bit rate and constant power level signals and at least one of either variable bit rate and variable power level signals, the device comprising: means for producing and outputting a time multiplexed channel by time multiplexing only the constant bit rate and constant power level signals for output on a first channel; and means for outputting at least one of the variable bit rate and variable power level signals on a second channel which is independent of the first channel.

Preferably, there is provided a device further comprising encoders for orthogonally spreading the first channel and the second channel using respective orthogonal codes.

An embodiment provides a device wherein the plurality of channels comprises a pilot channel signal, a control channel signal, a voice channel signal and a packet channel signal, and wherein means for producing a time multiplexed channel comprises: a multiplexer for time multiplexng the pilot channel signal and the control channel signal; a first orthogonal encoder for orthogonally spreading the output of the multiplexer using an orthogonal code; a second orthogonal encoder for orthogonally spreading the voice channel signal having a variable bit rate using an orthogonal code; a third orthogonal encoder for orthogonally spreading the packet channel signal having a variable bit rate using an orthogonal code; an IQ signal mapper for adding the outputs of the first and third orthogonal encoders, outputting the added signal on the first channel and outputting the output of the second orthogonal encoder on the second channel.

Preferably, the IQ mapper further comprises means for outputting the output of the second orthogonal encoder on the second channel in the presence of a voice channel signal; and means for outputting the outputs of the first and third orthogonal encoders on the first channel and the second channel respectively in the absence of a voice channel signal.

Still more preferably, en embodiment provides a device further comprising a PN spreader for spreading the first and second channels using PN codes to produce a spread spectrum signal; and means for outputting the spread spectrum signal.

Preferably, the PN spreader comprises means for complex-multiplying the first and second channels using PN codes.

A preferred embodiment provides a device further comprising a baseband modulator for baseband filtering the output of the PN spreader and modulating the filtered signal.; and/or a frequency converter for upconverting the frequency of the output of the baseband modulator to a transmission frequency.

A preferred embodiment provides a device wherein the means for producing and outputting a time multiplexed channel comprises a plurality of rate adaptors for adjusting the rates of the at least one of either constant bit rate and constant power level signals and at least one of either variable bit rate and variable power level signals; a plurality of signal mappers for converting the Os and 1s received from the rate adaptors into +1s and -1s respectively; a plurality of channel amplitude controllers for multiplying the outputs of the signal mappers by corresponding channel amplitude control values.

Still more preferably, an embodiment provides a device wherein the orthogonal codes comprises multipath resistant pseudo codes (MRPOCs) such as are described in the appendix.

A second aspect of the present invention provides a spread spectrum signal generating method for a transmitter of a mobile communication system using a plurality of channels comprising at least one of either constant bit rate and constant power level signals and at least one of either variable bit rate and variable power level signals, the method comprising the steps of producing and outputting a time multiplexed channel by time multiplexing only the constant bit rate and constant power level signals for output on a first channel; and outputting at least one of the variable bit rate and variable power level signals on a second channel which is independent of the first channel.

A preferred embodiment provides a method further comprising the step of orthogonally spreading the first channel and the second channel using respective orthogonal codes.

Preferably, a method is provided wherein the plurality of channels comprises a pilot channel signal, a control channel signal, a voice channel signal and a packet channel signal, and wherein the step of producing a time multiplexed channel comprises the steps of time multiplexng the pilot channel signal and the control channel signal; orthogonally spreading, using a first orthogonal encoder, the output of the multiplexer using an orthogonal code; orthogonally spreading, using a second orthogonal encoder, the voice channel signal having a variable bit rate using an orthogonal code; orthogonally spreading, using a third orthogonal encoder, the packet channel signal having a variable bit rate using an orthogonal code; and adding the outputs of the first and third orthogonal encoders, outputting the added signal on the first channel and outputting the output of the second orthogonal encoder on the second channel.

An embodiment preferably provides a method further comprising the steps of outputting the output of the second orthogonal encoder on the second channel in the presence of a voice channel signal; and outputting the outputs of the first and third orthogonal encoders on the first channel and the second channel respectively in the absence of a voice channel signal.

Preferably, there is provided a method further comprising the steps of spreading, using a PN spreader, the first and second channels using PN codes to produce a spread spectrum signal; and outputting the spread spectrum signal.

An embodiment of the present invention provides a method wherein the step of spreading comprises the step complex-multiplying the first and second channels using PN codes.

Preferably, a method provides a method further comprising the steps of baseband filtering, using a baseband modulator, the output of the PN spreader; and modulating the filtered signal.

A preferred embodiment provides a method further comprising the step of upconverting, using a frequency converter, the frequency of the output of the baseband modulator to a transmission frequency.

Preferably, there is provided a method wherein the step of producing and outputting a time multiplexed channel comprises the steps of adjusting, using a plurality of rate adaptors, the rates of the at least one of either constant bit rate and constant power level signals and at least one of either variable bit rate and variable power level signals; converting, using a plurality of signal mappers, the 0s and 1s received from the rate adaptors into +1s and -1s respectively; multiplying, using a plurality of channel amplitude controller, the outputs of the signal mappers by corresponding channel amplitude control values.

Preferably, an embodiment provides a method wherein the orthogonal codes comprises multipath resistant pseudo codes (MRPOCs).

Embodiments of the present invention advantageously provide a spread spectrum signal generating device and method in a mobile communications system for transmitting data of multiple logical channels, where the data of logical channels having constant transmit power levels is channelised by multiplexing and orthogonal codes.

Embodiments facilitate the provision a spread spectrum signal generating device in a mobile communications system for transmitting data of multiple logical channels, where the data of logical channels having a constant transmit power levels is channelised by multiplexing and the data of the other logical channels is channelised on the basis of the power level of the multiplexed channel.

An embodiment provides a spread spectrum signal generating device in a transmitter of a mobile communications system using a plurality of logical channels. In the spread spectrum signal generating device, a multiplexer time multiplexes a pilot channel signal and a control channel signal which are output at constant power levels, a first orthogonal encoder orthogonally spreads the output of the multiplexer with an orthogonal code, a second orthogonal encoder orthogonally spreads voice channel data of a variable bit rate with an orthogonal code, a third orthogonal encoder orthogonally spreads packet channel data of a variable bit rate with an orthogonal code, an IQ signal mapper adds the outputs of the first and third orthogonal encoders, outputs the added signal as a first channel signal, and outputs the output of the second orthogonal encoder as a second channel signal, and a PN spreader spreads the first and second channel signals with PN codes and outputs a final spectrum spread signal. Therefore, a peak-to-average power ratio of the transmitter is maintained at a substantially uniform level.

Embodiments of the present invention will now be described, by way of example only, with reference to the accompanying drawings in which:

figure 1 is a block diagram of a spread spectrum transmitter in a mobile communications system;

figure 2A is a block diagram of a logical channel data generator shown in figure 1;

figure 2B is a block diagram of scramblers shown in figure 2A;

figures 3A and 3B are block diagrams of a channeliser shown in figure 1;

figures 4A and 4B are block diagrams of an IQ signal mapper shown in figure 1;

figures 5A and 5B are block diagrams of a PN spreader shown in figure 1;

figure 6 is a block diagram of a baseband modulator shown in figure 1;

figure 7A is a block diagram of a logical channel data generator according to an embodiment of the present invention;

figure 7B is a block diagram of scramblers shown in figure 7A;

figure 8 is a block diagram of a channeliser according to an embodiment of the present invention;

figure 9 illustrates output characteristics of the channeliser according to an embodiment of the present invention; and

figures 10A and 10B are block diagrams of an IQ signal mapper according to an embodiment of the present invention.

Simultaneous transmission of pilot data, control data, voice data, and packet data increases a peak-to-average power ratio in a mobile communications system for transmitting data of multiple logical channels. This may cause problems in the linearity of a power amplifier of a transmitter. The peak-to-average power ratio and the number of orthogonal codes used for channelisation can be reduced by channelising a pilot signal and a data signal through time multiplexing.

If there exists only pilot data, control data and voice data such that the voice data has the highest bit rate in a transmitter using the parallel probe method, the power ratio of pilot channel: control channel: voice channel is 1:1/4:4 and a peak-to-average power ratio at an output terminal is 6.95dB. In addition, with voice data having a bit rate of one eighth of the highest bit rate, the power ratio becomes 1:1/4:1/2 and the peak-to-average power ratio is 7.23dB. Here, the average energy ratio per unit time of the pilot channel to the control channel is fixed at 1:1/4. However, since the voice channel has a variable bit rate, it has 4-1/2 times the average energy of the pilot channel. The peak-to- average power ratio increases as the difference in energy between channels which are added in the IQ signal mapper 115 reduces.

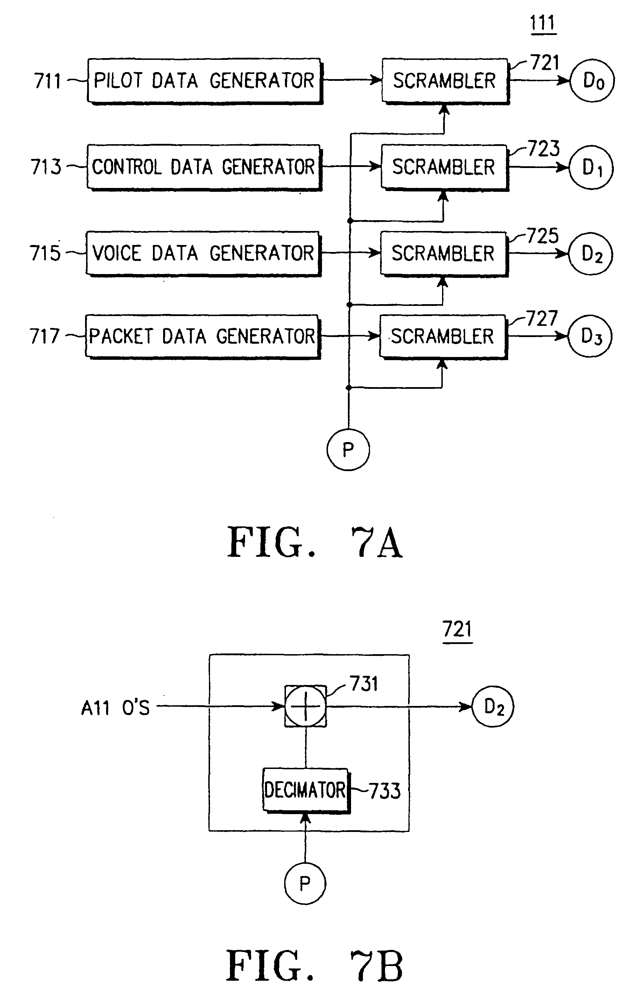

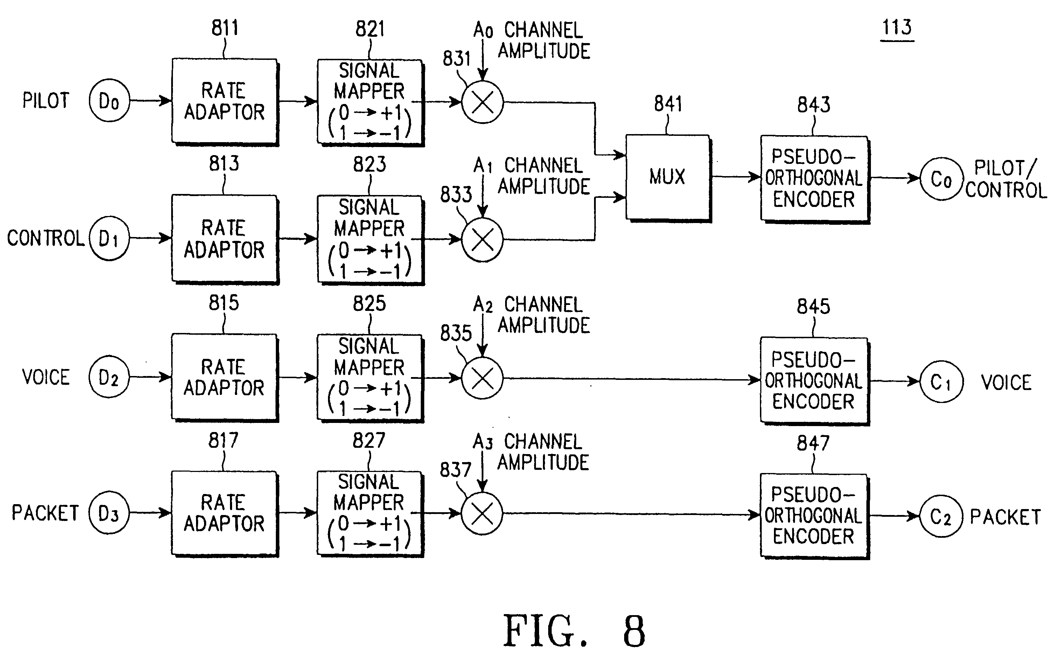

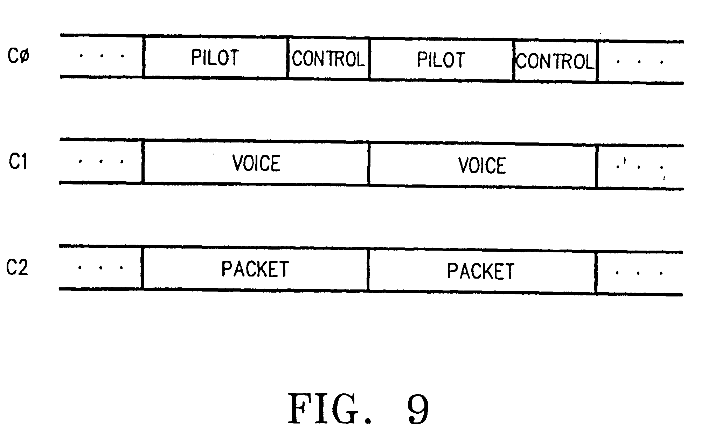

In an embodiment of the present invention relying on the above principles, the logical channel data generator 111 is configured as shown in figures 7A and 7B, and the channeliser 113 is constituted as shown in figure 8 so that the power level of the multiplexed pilot/control channel is set to be the sum of the power level of the pilot channel and the power level of the control channel in parallel probing. For example, if the power level of the pilot channel is 1 and that of the control channel is ¼ in parallel probing then the power level of the time multiplexed pilot/control channel is 1+¼. The control channel is output for 4/5 time as shown in figure 9.

Figure 7A is a block diagram of the logical channel data generator 111 according to an embodiment of the present invention, and figure 7B is a block diagram of scramblers shown in figure 7A.

Referring to figure 7A, the logical channel data generator 111 includes a pilot data generator 711, a control data generator 713, a voice data generator 715, and a packet data generator 717. The pilot data generator 711 outputs unmodulated consecutive bits 0s. Control data generated from the control data generator 713 comprises a power control command for power control on a forward link or other control information. The voice data generator 715 outputs data from a vocoder at a variable bit rate. The voice data output from the vocoder can be, for example, a convolutionally encoded and interleaved bit sequence. The encoded voice data is output at a VBR of 1/2, 1/4, or 1/8, increasing one bit time by two, four, or eight times. The packet data generator 717 has an output bit rate which is an integer multiple of the highest bit rate 1 to 8 of the voice data generator 215. Scramblers 721 to 727 scramble the data received from the data generators 711 to 717.

Referring to figure 7B, a decimator 733 of the scrambler 721 to 727 decimates according to a predetermined value P, and an exclusive OR gate 731 exclusive Ors the output of the data generators 711 to 717 with the output of the decimator 733. The pilot data, control data, voice data, and packet data are all encoded and interleaved. The interleaved data is exclusive ORed with the data resulting from decimating a second PN code sequence at the same bit rate as that of the interleaved data. Figure 8 is a block diagram of the channeliser 113 according to the embodiment of the present invention. Referring to figure 8, rate adaptors 811 to 817 are connected to the corresponding data generators 711 to 717, for adjusting the data transmission rates of the data generators 711 to 717. Signal mappers 821 to 827 are connected to the rate adaptors 811 to 817, for converting bits, 0s and Is, of the rate-adapted data to + 1s and - 1s, respectively. Multipliers 831 to 837 multiply the outputs of the signal mappers 821 to 827 by the corresponding channel amplitude control signals A0 to A3. A multiplexer 841 multiplexes the outputs of the multipliers 831 and 832. The multiplexed signal is a pilot/control channel signal. A pseudo-orthogonal encoder 842 spreads the pilot/control channel signal with a multipath resistant pseudo-orthogonal code (MRPOC) to overcome the problem or orthogonality loss caused by a multipath signal component. A pseudo-orthogonal encoder 845 spreads the voice data channel signal with an MRPOC, and a pseudo-orthogonal encoder 847 spreads the packet data channel signal with an MRPOC. MRPOCs are described in the appendix and are the subject of co-pending application EP -A-0 898 393.

In realising the channeliser 113 of figure 8, if E and F are the corresponding channel gains in the conventional parallel probe, the gains $A_0$ and $A_1$ in this invention have identical values computed from E and F by equations (1) and the pilot and control channels are output for the time periods calculated by equations (2) and (3), respectively.

$$A_0 = \sqrt{E^2 + F^2}, \qquad A_1 = \sqrt{E^2 + F^2} \qquad (1)$$

$$\frac{E^2}{E^2 + F^2} \qquad (2)$$

$$\frac{F^2}{E^2 + F^2} \qquad (3)$$

Therefore, the multiplexer 841 of figure 8 multiplexes the pilot and control channel signals to a signal $C_0$ as shown in figure 9, and the voice and packet data channel signals are output without being multiplexed. The output of the multiplexer 841, the voice data signal, and the packet data signal are spread by the pseudo-orthogonal encoders 843 to 847 thereby ensuring orthogonality which would otherwise be lost due to a multipath propagated component.

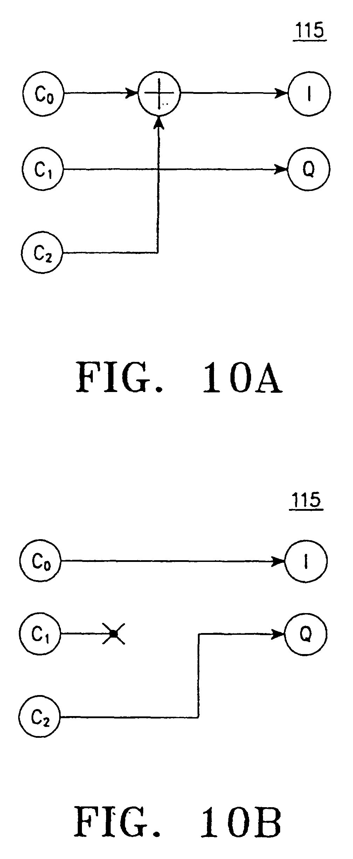

When the voice channel transmits power, that is, in the presence of voice data, the voice channel signal is output as a Q channel signal, as shown in figure 10A, and the packet/control channel signal is added to the packet data signal by an adder and output as an I channel signal. In the absence of voice data, the packet signal is output as a Q channel signal and the packet/control signal is output as an I channel signal, as shown in figure 10B. When power is transmitted from the voice channel output from the channeliser 113, the IQ signal mapper 115 outputs the voice channel signal in using a phase which is different to that of the pilot/control channel and adds the packet data and the pilot/control channel signal to the other output, as shown in figure 10A. If the voice channel is off, the packet channel signal is output using a phase which is different to that if the pilot/control channel signal, as shown in figure 10B.

The PN spreader 117 in the embodiment of the present invention may be configured as shown in figure 5B and reduces a peak-to-average power ratio. Preferably, the modulation follows the method of figure 6 In this case, the peak-to-average power ratio is smaller than that in a general parallel probe method by between 1.5-1.9dB.

The Walsh encoders of figure 3B or inner codes of a pseudo-orthogonal code can be used for the pseudo-orthogonal encoders 843 to 847 of figure 8.

Preferably, a PN sequence should be generated to have an appropriate bit rate in a PN code generator. Since pilot data is always uniform, use of the pseudo-orthogonal codes may cause interference to other users. To prevent this, the pilot data is scrambled by a scrambling sequence decimated from the second PN code generator.

As described above, a pilot signal and a data signal are channelised through time multiplexing in a mobile communications system using a plurality of logical channels such as pilot data, control data, voice data and packet data thereby reducing a peak-to-average power ration and the number of orthogonal codes involved in channelisation.

While the present invention has been described in detail with reference to the specific embodiment, it is a mere exemplary application. Thus, it is to be clearly understood that many variations can be made by anyone skilled in the art within the scope of the present invention.

**Claims**

1. A spread spectrum signal generating device (113) for a transmitter of a mobile communication system using a plurality of channels comprising at least one of either constant bit rate and constant power level signals and at least one of either variable bit rate and variable power level signals, the device comprising:

   means for producing and outputting a time multiplexed channel by time multiplexing only the constant bit rate and constant power level signals for output on a first channel; and
   means for outputting at least one of the variable bit rate and variable power level signals on a second channel which is independent of the first channel;
   encoders for orthogonally spreading the first channel and the second channel using respective orthogonal codes;
   wherein the plurality of channels comprises a pilot channel signal, a control channel signal, a voice channel signal and a packet channel signal, and wherein means for producing a time multiplexed channel comprises;
   a multiplexer (841) for time multiplexng the pilot channel signal and the control channel signal;
   a first orthogonal encoder (843) for orthogonally spreading the output of the multiplexer using an orthogonal code;
   a second orthogonal encoder (845) for orthogonally spreading the voice channel signal having a variable bit rate using an orthogonal code;
   a third orthogonal encoder (847) for orthogonally spreading the packet channel signal having a variable bit rate using an orthogonal code; an IQ signal mapper (115) for adding the outputs of the first and third orthogonal encoders, outputting the added signal on the first channel and outputting the output of the second orthogonal encoder on the second channel.

2. A device as claimed in claim 1, wherein the IQ mapper further comprises

means for outputting the output of the second orthogonal encoder on the second channel in the presence of a voice channel signal; and means for outputting the outputs of the first and third orthogonal encoders on the first channel and the second channel respectively in the absence of a voice channel signal.

3. A device as claimed in either of claims 1 or 2, further comprising

a PN spreader for spreading the first and second channels using PN codes to produce a spread spectrum signal; and means for outputting the spread spectrum signal.

4. A device as claimed in claim 3, wherein the PN spreader comprises

means for complex-multiplying the first and second channels using PN codes.

5. A device as claimed in either of claims 3 or 4, further comprising

a baseband modulator for baseband filtering the output of the PN spreader and modulating the filtered signal.

6. A device as claimed in claim 5, further comprising a frequency converter for upconverting the frequency of the output of the baseband modulator to a transmission frequency.

7. A device as claimed in any preceding claim, wherein the means for producing and outputting a time multiplexed channel comprises

a plurality of rate adaptors for adjusting the rates of the at least one of either constant bit rate and constant power level signals and at least one of either variable bit rate and variable power level signals;

a plurality of signal mappers for converting the 0s and 1s received from the rate adaptors into +1s and -1s respectively;

a plurality of channel amplitude controllers for multiplying the outputs of the signal mappers by corresponding channel amplitude control values.

8. A device as claimed in any of claims 1 to 7, wherein the orthogonal codes comprises multipath resistant pseudo codes (MRPOCs).

9. A device as claimed in any preceding claim, wherein the time multiplexed first channel is output at a constant power level.

10. A device as claimed in any preceding claim, wherein the logical channel data generator and the pilot channel data are scrambled.

11. A spread spectrum signal generating method for a transmitter of a mobile communication system using a plurality of channels comprising at least one of either constant bit rate and constant power level signals and at least one of either variable bit rate and variable power level signals, the method comprising the steps of producing and outputting a time multiplexed channel by time multiplexing only the constant bit rate and constant power level signals for output on a first channel;

outputting at least one of the variable bit rate and variable power level signals on a second channel which is independent of the first channel;

orthogonally spreading the first channel and the second channel using respective orthogonal codes;

wherein the plurality of channels comprises a pilot channel signal, a control channel signal, a voice channel signal and a packet channel signal, and wherein the step of producing a time multiplexed channel comprises the steps of

time multiplexing the pilot channel signal and the control channel signal;

orthogonally spreading, using a first orthogonal encoder (843), the output of the multiplexer using an orthogonal code;

orthogonally spreading, using a second orthogonal encoder (845), the voice channel signal having a variable bit rate using an orthogonal code;

orthogonally spreading, using a third orthogonal encoder (847), the packet channel signal having a variable bit rate using an orthogonal code;

adding the outputs of the first and third orthogonal encoders, outputting the added signal on the first channel and outputting the output of the second orthogonal encoder on the second channel.

12. A method as claimed in claim 11, further comprising the steps of

outputting the output of the second orthogonal encoder on the second channel in the presence of a voice channel signal; and outputting the outputs of the first and third orthogonal encoders on the first channel and the second channel respectively in the absence of a voice channel signal.

13. A method as claimed in either of claims 11 or 12, further comprising the steps of

spreading, using a PN spreader, the first and second channels using PN codes to produce a spread spectrum signal; and

outputting the spread spectrum signal.

14. A method as claimed in claim 13, wherein the step of spreading comprises the step

complex-multiplying the first and second channels using PN codes.

15. A method as claimed in either of claims 13 or 14, further comprising the steps of

baseband filtering, using a baseband modulator, the output of the PN spreader; and

modulating the filtered signal.

16. A method as claimed in claim 15, further comprising the step of

upconverting, using a frequency converter, the frequency of the output of the baseband modulator to a transmission frequency.

17. A method as claimed in any of claims 11 to 16; wherein the step of producing and outputting a time multiplexed channel comprises the steps of

adjusting, using a plurality of rate adaptors, the rates of the at least one of either constant bit rate and constant power level signals and at least one of either variable bit rate and variable power level signals;

converting, using a plurality of signal mappers, the 0s and 1s received from the rate adaptors into +1s and -1s respectively;

multiplying, using a plurality of channel amplitude controller, the outputs of the signal mappers by corresponding channel amplitude control values.

18. A method as claimed in any of claims 11 to 17, wherein the orthogonal codes comprises multipath resistant pseudo codes (MRPOCs).


**Patentansprüche**

1. Streuspektrum-Signalerzeugungsvorrichtung (113) für einen Sender eines mobilen Kommunikationssystems, bei dem eine Vielzahl von Kanälen eingesetzt wird, die Signale mit wenigstens entweder konstanter Bitrate oder konstantem Leistungspegel und Signale mit wenigstens entweder variabler Bitrate oder variablem Leistungspegel umfassen, wobei die Vorrichtung umfasst:

eine Einrichtung, die einen zeitmultiplexierten Kanal durch Zeitmultiplexieren lediglich der Signale mit konstanter Bitrate und konstantem Leistungspegel zur Ausgabe auf einem ersten Kanal erzeugt und ausgibt; und

eine Einrichtung, die die Signale mit wenigstens variabler Bitrate oder variablem Leistungspegel auf einem zweiten Kanal ausgibt, der unabhängig von dem ersten Kanal ist;

Codierer, die den ersten Kanal und den zweiten Kanal unter Verwendung entsprechender Orthogonal-Codes orthogonal streuen;

wobei die Vielzahl von Kanälen ein Pilotkanal-Signal ein Steuerkanal-Signal, ein Sprachkanal-Signal und ein Paketkanal-Signal umfasst, und wobei die Einrichtung zum Erzeugen eines zeitmultiplexierten Kanals umfasst:

einen Multiplexer (841), der das Pilotkanal-Signal und das Steuerkanal-Signal zeitmultiplexiert;

einen ersten Orthogonal-Codierer (843), der den Ausgang des Multiplexers unter Verwendung eines Orthogonal-Codes orthogonal streut;

einen zweiten Orthogonal-Codierer (845), der das Sprachkanal-Signal mit einer variablen Bitrate unter Verwendung eines Orthogonal-Codes orthogonal streut;

einen dritten Orthogonal-Codierer (847), der das Paketkanal-Signal mit einer variablen Bitrate unter Verwendung eines Orthogonal-Codes orthogonal streut,

einen IQ-Signal-Mapper (115), der die Ausgänge des ersten und des dritten Orthogonal-Codierers addiert, das addierte Signal auf dem ersten Kanal ausgibt und den Ausgang des zweiten Orthogonal-Codierer auf dem zweiten Kanal ausgibt.

2. Vorrichtung nach Anspruch 1, wobei der IQ-Mapper des Weiteren umfasst:

eine Einrichtung, die beim Vorhandensein eines Sprachkanal-Signals den Ausgang des zweiten Orthogonal-Codierers auf dem zweiten Kanal ausgibt; und eine Einrichtung, die beim Nichtvorhandensein eines Sprachkanal-Signals die Ausgänge des ersten und des dritten Orthogonal-Codierers auf dem ersten Kanal bzw. dem zweiten Kanal ausgibt.

3. Vorrichtung nach einem der Ansprüche 1 oder 2, die des Weiteren umfasst:

eine PN-Streueinrichtung, die den ersten und den zweiten Kanal unter Verwendung von PN-Codes streut, um ein Streuspektrum-Signal zu erzeugen; und

eine Einrichtung, die das Streuspektrum-Signal ausgibt.

4. Vorrichtung nach Anspruch 3, wobei die PN-Streueinrichtung umfasst:

eine Einrichtung, die den ersten und den zweiten Kanal unter Verwendung von PN-Codes komplex multiplexiert.

5. Vorrichtung nach einem der Ansprüche 3 oder 4, die des Weiteren umfasst:

einen Basisband-Modulator, der Basisbandfiltern des Ausgangs der PN-Streueinrichtung durchführt und das gefilterte Signal moduliert.

6. Vorrichtung nach Anspruch 5, die des Weiteren einen Frequenzwandler umfasst, der Aufwärtswandeln der Frequenz des Ausgangs des Basisband-Modulators auf eine Sendefrequenz durchführt.

7. Vorrichtung nach einem der vorangehenden Ansprüche, wobei die Einrichtung, die einen zeitmultiplexierten Kanal erzeugt und ausgibt, umfasst:

eine Vielzahl von Raten-Anpassungsgliedern zum Regulieren der Raten der Signale mit wenigstens entweder konstanter Bitrate oder konstantem Leistungspegel, und der Signale mit wenigstens entweder variabler Bitrate oder variablem Leistungspegel;

eine Vielzahl von Signal-Mappem, die die 0- und 1-Werte, die von den Raten-Anpassungsgliedern empfangen werden, in +1- und -1-Werte umwandeln;

eine Vielzahl von Kanalamplituden-Steuergliedern, die die Ausgänge der Signal-Mapper mit entsprechenden Kanalamplituden-Steuerwerten multiplizieren.

8. Vorrichtung nach einem der Ansprüche 1 bis 7, wobei die Orthogonal-Codes Pseudo-Codes, die gegenüber Mehrwegestörung (multipath resistant pseudo codes - MRPOC) beständig sind, umfassen.

9. Vorrichtung nach einem der vorangehenden Ansprüche, wobei der zeitmultiplexierte erste Kanal auf einem konstanten Leistungspegel ausgegeben wird.

10. Vorrichtung nach einem der vorangehenden Ansprüche, wobei der logische Kanal-Datengenerator und die Pilotkanal-Daten verscrambelt werden.

11. Streuspektrumsignal-Erzeugungsverfahren für einen Sender eines mobilen Kommunikationssystems, das eine Vielzahl von Kanälen verwendet, die Signale mit wenigstens entweder konstanter Bitrate oder konstantem Leistungspegel und Signale mit wenigstens entweder variabler Bitrate oder variablem Leistungspegel umfassen, wobei das Verfahren die Schritte des Erzeugens und Ausgebens eines zeitmultiplexierten Kanals durch Zeitmultiplexieren lediglich der Signale mit konstanter Bitrate und konstantem Leistungspegel zum Ausgeben auf einem ersten Kanal;
des Ausgebens der Signale mit wenigstens entweder variabler Bitrate oder variablem Leistungspegel auf einem zweiten Kanal, der unabhängig von dem ersten Kanal ist;
der Orthogonal-Streuung des ersten Kanals und des zweiten Kanals unter Verwendung entsprechender Orthogonal-Codes umfasst;
wobei die Vielzahl von Kanälen ein Pilotkanal-Signal, ein Steuerkanal-Signal, ein Sprachkanal-Signal und ein Paketkanal-Signal umfasst, und wobei der Schritt des Erzeugens eines zeitmultiplexierten Kanals die folgenden Schritte umfasst:

Zeitmultiplexieren des Pilotkanal-Signals und des Steuerkanal-Signals;

Orthogonal-Streuung des Ausgangs des Multiplexers unter Verwendung eines Orthogonal-Codes mit einem ersten Orthogonal-Codierer (843);

Orthogonal-Streuung des Sprachkanal-Signals mit einer variablen Bitrate unter Verwendung eines Orthogonal-Codes mit einem zweiten Orthogonal-Codierer (845);

Orthogonal-Streuung des Paketkanal-Signals mit einer variablen Bitrate unter Verwendung eines Orthogonal-Codes mit einem dritten Orthogonal-Codierer (847);

Addieren der Ausgänge des ersten und des zweiten Orthogonal-Codierers, Ausgeben des addierten Signals auf dem ersten Kanal und Ausgeben des Ausgangs des zweiten Orthogonal-Codierers auf dem zweiten Kanal.

12. Verfahren nach Anspruch 11, das des Weiteren die folgenden Schritte umfasst:

Ausgeben des Ausgangs des zweiten Orthogonal-Codierers auf dem zweiten Kanal beim Vorhandensein eines Sprachkanal-Signals; und

Ausgeben der Ausgänge des ersten und des dritten Orthogonal-Codierers auf dem ersten Kanal bzw. dem zweiten Kanal beim Nichtvorhandensein eines Sprachkanal-Signals.

13. Verfahren nach einem der Ansprüche 11 oder 12, das des Weiteren die folgenden Schritte umfasst:

Streuen des ersten und des zweiten Kanals unter Verwendung von PN-Codes mit einer PN-Streueinrichtung, um ein Streuspektrum-Signal zu erzeugen; und

Ausgeben des Streuspektrum-Signals.

14. Verfahren nach Anspruch 13, wobei der Schritt des Streuens den Schritt des komplexen Multiplexierens des ersten und des zweiten Kanals unter Verwendung von PN-Codes umfasst.

15. Verfahren nach einem der Ansprüche 13 oder 14, das des Weiteren die folgenden Schritte umfasst:

Durchführen von Basisbandfiltern des Ausgangs der PN-Streueinrichtung mit einem Basisband-Modulator; und

Modulieren des gefilterten Signals.

16. Verfahren nach Anspruch 15, das des Weiteren den Schritt des Aufwärtswandelns der Frequenz des Ausgangs des Basisband-Modulators auf eine Sendefrequenz mit einem Frequenzwandler umfasst.

17. Verfahren nach einem der Ansprüche 11 bis 16, wobei der Schritt des Erzeugens und Ausgebens eines zeitmultiplexierten Kanals die folgenden Schritte umfasst:

Regulieren der Raten der Signale mit wenigstens entweder konstanter Bitrate oder konstantem Leistungspegel und der Signale mit wenigstens entweder variabler Bitrate oder variablem Leistungspegel mit einer Vielzahl von Raten-Anpassungsgliedem;

Umwandeln der 0- und 1-Werte, die von den Raten-Anpassungsgliedern empfangen werden, in +1- bzw. -1-Werte mit einer Vielzahl von Signal-Mappern;

Multiplizieren der Ausgänge der Signal-Mapper mit entsprechenden Kanalamplituden-Steuerwerten mit einer Vielzahl von Kanalamplituden-Steuergliedern.

18. Verfahren nach einem der Ansprüche 11 bis 17, wobei die Orthogonal-Codes Pseudo-Codes, die gegenüber Mehrwegestörung beständig sind (MRPOC), umfassen.

## Revendications

1. Dispositif de génération de signal à spectre étalé (113) pour un émetteur d'un système de communication mobile utilisant une pluralité de canaux comprenant au moins l'un parmi l'un ou l'autre de signaux à débit de bits constant et à niveau de puissance constant et au moins l'un parmi l'un ou l'autre de signaux à débit de bits variable et à niveau de puissance variable, le dispositif comprenant :

des moyens pour produire et délivrer en sortie un canal multiplexé dans le temps en multiplexant dans le temps uniquement les signaux à débit de bits constant et à niveau de puissance constant pour la délivrance en sortie sur un premier canal ; et
des moyens pour délivrer en sortie au moins l'un des signaux à débit de bits variable et à niveau de puissance variable sur un deuxième canal qui est indépendant du premier canal ;
des codeurs pour étaler de façon orthogonale le premier canal et le deuxième canal à l'aide de codes orthogonaux respectifs ;

dans lequel la pluralité de canaux comprennent un signal de canal pilote, un signal de canal de commande, un signal de canal vocal et un signal de canal de paquets, et dans lequel des moyens pour produire un canal multiplexé dans le temps comprennent :

un multiplexeur (841) pour multiplexer dans le temps le signal de canal pilote et le signal de canal de commande ;
un premier codeur orthogonal (843) pour étaler de façon orthogonale la sortie du multiplexeur à l'aide d'un code orthogonal ;
un deuxième codeur orthogonal (845) pour étaler de façon orthogonale le signal de canal vocal ayant un débit de bits variable à l'aide d'un code orthogonal ;
un troisième codeur orthogonal (847) pour étaler de façon orthogonale le signal de canal de paquets ayant un débit de bits variable à l'aide d'un code orthogonal ;
un dispositif de projection de signal IQ (115) pour additionner les sorties des premier et troisième codeurs orthogonaux, pour délivrer en sortie le signal additionné sur le premier canal et pour délivrer en sortie la sortie du deuxième codeur orthogonal sur le deuxième canal.

**2.** Dispositif selon la revendication 1, dans lequel le dispositif de projection IQ comprend de plus :

des moyens pour délivrer en sortie la sortie du deuxième codeur orthogonal sur le deuxième canal en présence d'un signal de canal vocal ; et des moyens pour délivrer en sortie les sorties des premier et troisième codeurs orthogonaux sur le premier canal et le deuxième canal, respectivement, en l'absence d'un signal de canal vocal.

**3.** Dispositif selon l'une ou l'autre des revendications 1 ou 2, comprenant de plus :

un dispositif d'étalement PN pour étaler les premier et deuxième canaux à l'aide de codes PN de façon à produire un signal à spectre étalé ; et des moyens pour délivrer en sortie le signal à spectre étalé.

**4.** Dispositif selon la revendication 3, dans lequel le dispositif d'étalement PN comprend ;

des moyens pour multiplier de façon complexe les premier et deuxième canaux à l'aide de codes PN.

**5.** Dispositif selon l'une ou l'autre des revendications 3 ou 4,comprenant de plus :

un modulateur de bande de base pour filtrer la bande de base de la sortie du dispositif d'étalement PN et moduler le signal filtré.

**6.** Dispositif selon la revendication 5, comprenant de plus un convertisseur de fréquence pour élever la fréquence de la sortie du modulateur de bande de base à une fréquence d'émission.

**7.** Dispositif selon l'une quelconque des revendications précédentes, dans lequel les moyens pour produire et délivrer en sortie un canal multiplexé dans le temps comprennent :

une pluralité d'adaptateurs de débit pour ajuster les débits du signal au nombre d'au moins l'un parmi l'un ou l'autre de signaux à débit de bits constant et à niveau de puissance constant et d'au moins l'un parmi l'un ou l'autre de signaux à débit de bits variable et à niveau de puissance variable ; une pluralité de dispositifs de projection de signal pour convertir les 0 et les 1 reçus à partir des adaptateurs de débit en +1 et en -1, respectivement ; une pluralité de dispositifs de commande d'amplitude de canal pour multiplier les sorties des dispositifs de projection de signal par des valeurs de commande d'amplitude de canal correspondantes.

**8.** Dispositif selon l'une quelconque des revendications 1 à 7, dans lequel les codes orthogonaux comprennent des pseudo-codes résistants à trajets multiples (multipath resistant pseudo codes ou MRPOCs).

**9.** Dispositif selon l'une quelconque des revendications précédentes, dans lequel le premier canal multiplexé dans le temps est délivré en sortie sous la forme d'un niveau de puissance constant.

**10.** Dispositif selon l'une quelconque des revendications précédentes, dans lequel le générateur de données de canal logique et les données de canal pilote sont brouillés.

**11.** Procédé de génération de signal à spectre étalé pour un émetteur d'un système de communication mobile utilisant une pluralité de canaux comprenant au moins l'un parmi l'un ou l'autre de signaux à débit de bits constant et à niveau de puissance constant et au moins l'un parmi l'un ou l'autre de signaux à débit de bits variable et à niveau de puissance variable, le procédé comprenant les étapes consistant à produire et à délivrer en sortie un canal multiplexé dans le temps en multiplexant dans le temps uniquement les signaux à débit de bits constant et à niveau de puissance constant pour la délivrance en sortie sur un premier canal ; délivrer en sortie au moins l'un des signaux à débit de bits variable et à niveau de puissance variable sur un deuxième canal qui est indépendant du premier canal ; étaler de façon orthogonale le premier canal et le deuxième canal à l'aide de codes orthogonaux respectifs; dans lequel la pluralité de canaux comprennent un signal de canal pilote, un signal de canal de commande, un signal de canal vocal et un signal de canal de paquets, et dans lequel l'étape de production d'un canal multiplexé dans le temps comprend les étapes consistant à :

multiplexer dans le temps le signal de canal pilote et le signal de canal de commande ; étaler de façon orthogonale, à l'aide d'un premier codeur orthogonal (843), la sortie du multiplexeur à l'aide d'un code orthogonal ; étaler de façon orthogonale, à l'aide d'un deuxième codeur orthogonal (845), le signal de canal vocal ayant un débit de bits variable à l'aide d'un code orthogonal ; étaler de façon orthogonale, à l'aide d'un troisième codeur orthogonal (847), le signal de canal de paquets ayant un débit de bits variable à l'aide d'un code orthogonal ;
additionner les sorties des premier et troisième codeurs orthogonaux, délivrer en sortie le signal additionné sur le premier canal et délivrer en sortie la sortie du deuxième codeur orthogonal sur le deuxième canal.

**12.** Procédé selon la revendication 11, comprenant de plus les étapes consistant à :

délivrer en sortie la sortie du deuxième codeur orthogonal sur le deuxième canal en présence d'un signal de canal vocal ; et délivrer en sortie les sorties des premier et troisième codeurs orthogonaux sur le premier canal et le deuxième canal, respectivement, en l'absence d'un signal de canal vocal.

**13.** Procédé selon l'une ou l'autre des revendications 11 et 12, comprenant de plus les étapes consistant à :

étaler, à l'aide d'un dispositif d'étalement PN, les premier et deuxième canaux à l'aide de codes PN de façon à produire un signal à spectre étalé ; et
délivrer en sortie le signal à spectre étalé.

**14.** Procédé selon la revendication 13, dans lequel l'étape d'étalement comprend l'étape consistant à :

multiplier de façon complexe les premier et deuxième canaux à l'aide de codes PN.

**15.** Procédé selon l'une ou l'autre des revendications 13 ou 14, comprenant de plus les étapes consistant à :

filtrer la bande de base, à l'aide d'un modulateur de bande de base, de la sortie du dispositif d'étalement PN ; et
moduler le signal filtré.

**16.** Procédé selon la revendication 15, comprenant de plus l'étape consistant à :

élever la fréquence, à l'aide d'un convertisseur de fréquence, de la sortie des modulateurs de bande de base à une fréquence d'émission.

**17.** Procédé selon l'une quelconque des revendications 11 à 16, dans lequel l'étape de production et de délivrance en sortie d'un canal multiplexé dans le temps comprend les étapes consistant à :

ajuster, à l'aide d'une pluralité d'adaptateurs de débit, les débits du signal au nombre d'au moins un parmi l'un ou l'autre des signaux à débit de bits constant et à niveau de puissance constant et d'au moins un parmi l'un ou l'autre des signaux à débit de bits variable et à niveau de puissance variable ;
convertir, à l'aide d'une pluralité de dispositifs de projection de signal, les 0 et les 1 reçus à partir des adaptateurs de débit en +1 et en -1, respectivement ;
multiplier, à l'aide d'une pluralité de dispositifs de commande d'amplitude de canal, les sorties des dispositifs de projection de signal par des valeurs de commande d'amplitude de canal correspondantes.

**18.** Procédé selon l'une quelconque des revendications 11 à 17, dans lequel les codes orthogonaux comprennent des pseudo-codes résistants à trajets multiples (multipath résistant pseudo codes ou MR-POCs).

FIG. 1

211 — PILOT DATA GENERATOR → $D_0$

213 — CONTROL DATA GENERATOR → SCRAMBLER — 219 → $D_1$

215 — VOICE DATA GENERATOR → SCRAMBLER — 221 → $D_2$

217 — PACKET DATA GENERATOR → SCRAMBLER — 223 → $D_3$

P

# FIG. 2A

VOICE DATA GENERATOR → 231 → $D_2$

232 — '0'

DECIMATOR — 233

P

# FIG. 2B

FIG. 3A

EP 0 903 871 B1

FIG. 3B

EP 0 903 871 B1

115

ODD—NUMBERED BITS $\longrightarrow$ (I)

$(C_0)$ $\longrightarrow$ S/P CONVERTER

EVEN—NUMBERED BITS $\longrightarrow$ (Q)

# FIG. 4A

115

$(C_0)$

421

$\oplus$ $\longrightarrow$ (I)

$(C_1)$

$(C_2)$

423

$\oplus$ $\longrightarrow$ (Q)

$(C_3)$

# FIG. 4B

18

EP 0 903 871 B1

117

FIG. 5A

FIG. 5B

EP 0 903 871 B1

615

PI → FIR FILTER → BI

611          613

PQ → DELAY → FIR FILTER → BQ

# FIG. 6

111

711 ~ PILOT DATA GENERATOR → SCRAMBLER ~721 → (D₀)

713 ~ CONTROL DATA GENERATOR → SCRAMBLER ~723 → (D₁)

715 ~ VOICE DATA GENERATOR → SCRAMBLER ~725 → (D₂)

717 ~ PACKET DATA GENERATOR → SCRAMBLER ~727 → (D₃)

(P)

# FIG. 7A

721

A11 O'S → ⊕ ~731 → (D₂)

DECIMATOR ~733

(P)

# FIG. 7B

FIG. 8

| C∅ | · · · | PILOT | CONTROL | PILOT | CONTROL | · · · |
|----|-------|-------|---------|-------|---------|-------|

| C1 | · · · | VOICE | VOICE | · · · |
|----|-------|-------|-------|-------|

| C2 | · · · | PACKET | PACKET | · · · |
|----|-------|--------|--------|-------|

# FIG. 9

EP 0 903 871 B1

115

# FIG. 10A

115

# FIG. 10B